# EUROPEAN PATENT APPLICATION

(11) **EP 2 876 854 A1**
(43) Date of publication of application: **27.05.2015**
(21) Application number: 13306615.9
(22) Date of filing: 26.11.2013
(51) Int. Cl.: H04L 29/06, H04L 9/32

(54) **A method and apparatus to identify a server in a communication network**

(71) Applicant: ALCATEL LUCENT, 92100 Boulogne-Billancourt (FR)
(72) Inventor: Roche, Sebastien, 67400 ILLKIRCH (FR); Degtounda, Marcel, 67400 ILLKIRCH (FR)
(74) Representative: Therias, Philippe

(57) **Abstract**

A method to identify a server (101) by a client (103), in a communication network (131), said client (103) comprising an assumed first name (125) and an assumed second name (127) that are assumed to provide connect information related to the server (101), said method comprising the following steps executed by the client (103):
- issuing (203) a request to connect to the server (101),
- receiving (205) from the server (101) an actual first name (115) and a an actual second name (117), said actual first name and actual second name providing connect information related to the server (101),
- identifying (207) the server (101) by checking if the actual first name (115) received from the server (101) matches the assumed first name (125),
- if the received actual first name (115) does not match the request, identifying (209) the server (101) by checking if the actual second name (117) received from the server (101) matches the assumed second name (127),
- associating the server (101) with an assumed functional name (129) being assumed to be representative of the function of the server (101),
- receiving (205) from the server (101) an actual functional name (119) representative of the function of the server (101),
- if the received actual first name (115) and the received actual second name (117) from the server (101) respectively do not match the assumed first name (125) and the assumed second name (127), identifying (211) the server by checking if the actual functional name (119) received from the server (101) matches the assumed functional name (129).

## Description

### FIELD OF THE INVENTION

The present invention relates to the identification of a server by a client, in a communication network.

### BACKGROUND OF THE INVENTION

Available online services have drastically increased in the last decade with the growing popularity of World Wide Web. Easiness of connections and variety of offerings have been key elements in the development of communication networks. Said networks are usually a patchwork of smaller sub-networks devised to fulfill a fraction of a task or a full task. The broad numbers of services along with the increased number of end users have made more complex networks constraints and design, and more especially on security aspects. The more many services are available, the more the sub-networks are to be involved, multiplying security risks.

It is crucial then to reliably connect an end user, querying for a given service, to an appropriate sub-network, said sub-network usually being structured on a server or group of servers. The reliability of the connection to a queried service remains partly on the identification of the server full filling the said queried service.

Security mechanisms of existing in-use protocols for connecting to servers, through the Internet for example, are available to guarantee a certain level of identification. For example, the exchange of electronic documents such as public key certificates, between a client and a server, allows guaranteeing the identity of the server, as far as the certificates can be trusted. The X.509 standard from the International Telecommunication Union Telecommunication Standardization Sector (ITU-T) provides certificate means for identification of the server, such as its common name or alternative name attributes. For instance, the URL used to access the server must match the common name of the certificate. When the common name does not match at all or not exactly with the used URL, the alternative name attribute may contain other identifiers, such as Internet Protocol (IP) address or Domain Name System (DNS) name, that can be used to confirm or infirm the identity of the server.

A major drawback of the use of names attributes such as common name or alternative name relies in the static aspect of said names. For example the URL of a server may change over time. Similarly, the IP address or the DNS name of the server may also be modified. A new access, like an alternate URL for example, may also be added to access the server. In all these cases, to ensure a proper level of identification, a new certificate must be issued to reflect the modification of the accesses of the server.

The present invention proposes a more flexible identification method and apparatus, which does not necessarily need to re-issue a public key certificate.

### SUMMARY OF THE INVENTION

The invention aims to remedy all or some of the disadvantages of the above identified prior art. It particularly proposes ways to enable identification of a server by a client.

A first aspect of the invention relates then to a method for a server to be identified, in a communication network, said server comprising an actual first name and an actual second name, said actual first name and actual second name providing connect information related to the server, and said method being characterized in that it comprises the following steps executed by the server:
- being associated with an actual functional name representative of the function of the server,
- providing the actual first name, the actual second name and the actual functional name of the server to a client upon a connection request.

Thus, thanks to these features, the method enables the server to provide identification information to a client upon a connection request. Such method is advantageous to identify the server according to its function and to avoid issuing a new public key certificate when connect information related to the server is modified.

A second aspect of the invention relates to a method to identify a server by a client, in a communication network, said client comprising an assumed first name and an assumed second name that are assumed to provide connect information related to the server, said method comprising the following steps executed by the client:
- issuing a request to connect to the server,
- receiving from the server an actual first name and an actual second name, said actual first name and actual second name providing connect information related to the server,
- identifying the server by checking if the actual first name received from the server matches the assumed first name,
- if the received actual first name does not match the request, identifying the server by checking if the actual second name received from the server matches the assumed second name,
said method being characterized in that it comprises the following steps executed by the client:
- associating the server with an assumed functional name being assumed to be representative of the function of the server,
- receiving from the server an actual functional name representative of the function of the server,
- if the received actual first name and the received actual second name from the server do not match the assumed first name and the assumed second name, identifying the server by checking if the actual functional name received from the server matches the assumed functional name.

Thus, thanks to these features, the method enables the client to identify the server by checking its functional name. Such method is advantageous to identify the server according to its function, without issuing a new public key certificate when connect information related to the server are modified.

### BRIEF DESCRIPTION OF THE FIGURES

Some embodiments of the present invention are now described, by way of example only, and with reference to the accompanying drawings, in which:
- FIG. 1 is a schematic block diagram of a communication network comprising an embodiment of the server and of the client according to the invention,
- FIG. 2 is a flowchart showing steps performed in this embodiment of the method according to the invention,

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

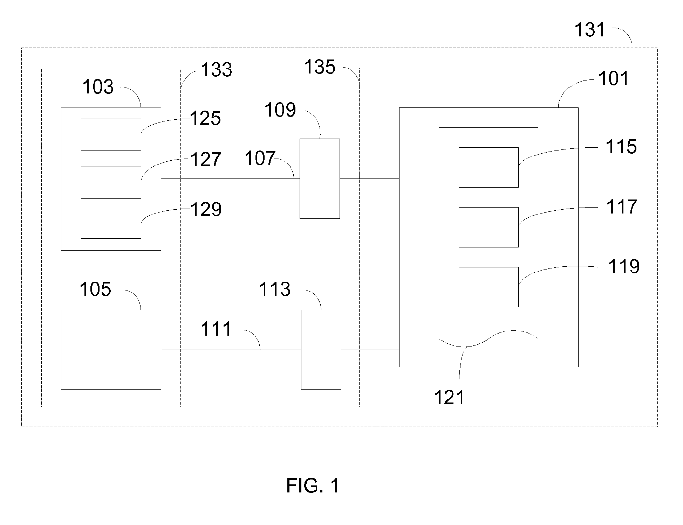

Referring to **FIG. 1****,** a schematic block diagram of a communication network 131 comprising an embodiment of the server and of the client according to the invention is depicted. In this embodiment, the communication network 131 comprises a first sub-network 133 and a second sub-network 135. In non limiting example, the first sub-network 133 is a World Area Network (WAN) and the second network 135 is a Local Area Network (LAN). Both first and second sub-networks are interacting through well-known means that are not depicted on FIG. 1.

The first sub-network 133 comprises a variety of clients. Depicted on FIG. 1, a client 103 and a client 105 are in the area covered by the first sub-network 133. In a non limiting example, the client 103 is a terminal enabling an end-user to benefit from services accessible within the communication network 131. In a non limiting example, the client 105 is an autonomously operated client such as an intelligent sensor that needs to access a service within the communication network 131.

The second sub-network 135 comprises a server 101, accessible from the perimeter of the communication network 131. Said server 101 is providing service through connection with clients that request them. In the example described below, the connection to be established with the server 101 is a secured one. In other examples, the connection to be established with the server 101 may be a non secure one.

In non limiting examples, the server 101 provides a service such as querying a database or storing files or multimedia streaming. In other non limiting examples, the server 101 may provide a combination of services. In yet another non-limiting example, the server 101 may act as a secure gateway to connect to another secure communication network such as a Virtual Private Network.

The client 103 accesses the server 101 by establishing a first connection 107. Said first connection 107 transits through a first access 109.

The client 105 accesses the server 101 by establishing a second connection 111. Said second connection 111 transits through a second access 113. In the context of the described embodiment, the first connection 107 and the second connection 113 are secured connections. Subsequently the first access 109 and the second access 113 are secured accesses. In a non limiting example said accesses are secured HyperText Transfer Protocol Secure (HTTPS) accesses.

For security aspects, and in particular for identification purpose, the server 101 comprises a security document 121. Said security document 121 further comprises information related to security and authentication of the server 101. In non limiting example, the security document 121 is characterized by constraints defined by an Authentication, Authorization and Accounting (AAA) protocol.

In a non limiting example the security document 121 is a simple digital signature. In the exposed embodiment, the security document 121 is an electronic document comprising a digital signature.

The security document 121 further comprises a first name 115 and a second name 117. Said names are used to identify the server 101. In non limiting examples, the first name 115 is a principal name of the server 101 and the second name 117 is an alternative name of the server 101. In other non limiting examples, the first name 115 is an address to connect to the server 101 and the second name 117 is an alternative address to connect to the server 101.

The security document 121 also comprises a functional name 119, representative of the function of the server 101 or of the services provided by the server 101. In non limiting examples, the functional name 119 of the server 101 may comprise the terms "server for storing files", or the terms "multimedia gateway".

The first name 115, the second name 117 and the functional name 119, of the server 101, are updated by a classical method when modifications are operated on the server 101. The first name 115 and the second name 117 are modified when the accesses of the server 101 are updated for example. The functional name 119 is also updated with the availability of the services provided by the server 101. The updated first name 115, second name 117 and functional name 119 will be referred respectively to the actual first name 115, the actual second name 117 and the actual functional name 119. These update of names may not be known from the elements of the communication network 131 others than the server 101.

At the time when the first client 103 needs to identify the server 101, the first client 103 assumes that the server 101 can be identified by:
- the assumed first name 125 of the server 101,
- the assumed second name 127 of ther server 101,
- the assumed functional name 129 of the server 101.

The assumed first name 125, the assumed second name 127 and the assumed functional name 129 are names that are assumed by the client 103 to respectively match the actual first name 115, the actual second name 117 and the actual functional name 119 of the sever 101. The said assumed names, known by the client 103, may corresponds to the actual names of the server 101 at some point. However on the server 101's side, the actual names may have been modified without noticing the change to the client 103.

In a non limiting example, the client 103 has acquired the first name, the second name and the functional name through a previous connection with the server 101, and the client 103 stored these information respectively as the assumed first name 125, the assumed second name 127 and the assumed functional name 129. However, in this example, after this previous connection, the accesses of the server 101 were modified, and then the actual first name 115 and the actual second name 117 were changed. Said changes were made without informing the client 103 rendering the assumed first name 125 and the assumed second name 127 outdated.

In another non limiting example, the assumed first name 125, the assumed second name 127 and the assumed functional name 129 are known by the client 103 through an internal database of servers. Said database comprises information such as the types of services offered by the servers or the parameters to reach the servers.

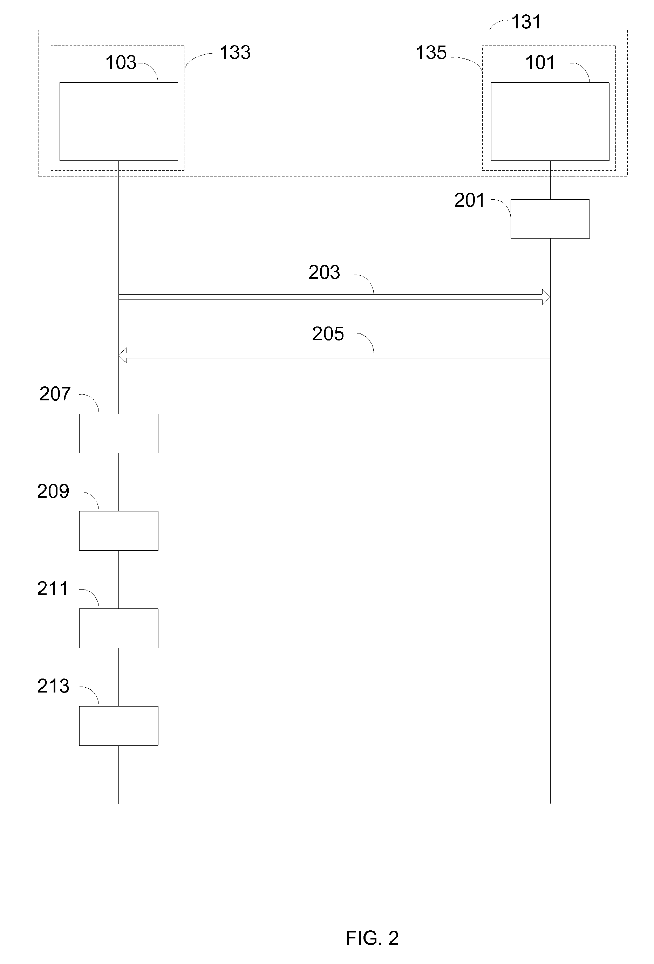

**FIG. 2** describes a flowchart showing steps performed in this embodiment of the method according to the invention.

**Step 201:** The security document 121 of the server 101 is initialized by registering the actual first name 115, the actual second name 117 and the actual functional name 119. The actual functional name 119 is representative of the function of the server 101, or of the services the server 101 is providing. In a non limiting example, the actual functional name 119 is set prior to the server 101's availability. In another non limiting example, the actual functional name 119 may be adapted or modified depending on the services provided by the server 101. If a service is shutdown temporarily or permanently during the functioning of the server 101, the actual functional name 119 may be adapted or modified to reflect the unavailability of said service.

**Step 203:** The client 103 needs the services provided by the server 101. The client 103 initiates then a request to connect to the server 101. In the present exposed embodiment, the request concerns the establishment of a secure connection with the server 101 via the first access 109. In this step 203, the client 103 generates the request to connect to the server 101 according to known information, such as the types of services offered by the server 101 provided by the assumed functional name 129, and also the parameters to reach the server 101 provided by the assumed first name 125 and the assumed second name 127. In a non limiting example, the client 101 generates a request to connect to said server by using the first access 109.

**Step 205:** Upon the reception of a connection request, if said request is valid, the server 101 acknowledges said request and responds by providing the security document 121 that comprises the actual first name 115, the actual second name 117 and the actual functional name 119. The requesting client receives then the acknowledgment of the server 101, which comprises this security document 121.

**Step 207:** The client 103 processes the security document 121 for security purposes. It checks if the received actual first name 115, comprised in the received security document 121, matches the assumed first name 125 known by the client 103. In a non limiting example, the client 103 checks if the received actual first name 115 matches the assumed first name 125 that comprises the information of the first access 109 used by the client 103 to connect to the server 101. If the received actual first name 115 matches the assumed first name 125 known by the client 103 that originated the connection request, the client 103 identifies then positively the server 101. The client 103 can then proceed further in the request of the services provided by the server 101. If the received actual first name 115 does not match the assumed first name 125, a step 209 is performed.

**Step 209:** The client 103 checks if the received actual second name 117 comprised in the received security document 121 matches the assumed second name 127 known to the client 103. In a non limiting example, the client 103 checks if the received actual second name 117 matches the assumed second name 127 that comprises the properties of the second sub-network 135 known by the client 103 to connect to the server 101. If the received actual second name 117 matches the assumed second name 127 known by the client 103 that originated the connection request, the client 103 identifies then positively the server 101. The client 103 can then proceed further in the request of the services provided by the server 101. If the received actual second name 117 does not match the assumed second name 127, a step 211 is performed.

**Step 211:** The client 103 checks if the received actual functional name 119 matches the assumed functional name 129. In a non limiting example, the first client 101 initiated a connection request to access file storage capabilities of the server 101, but the received actual first name 115 and the received actual second name 117 do not match respectively the assumed first name 125 and the assumed second name 127 known by the client 103, whereas the received actual functional name 119 comprises an information indicating that the server 101 is offering file storage capabilities. If the received actual functional name 119 matches the assumed functional name 119 known by the client 103 that originated the connection request, the client 103 identifies then the server 101 as the provider of services which have been requested. The server 101 and the client 103 proceed then further in the establishment of the services the client 103 is requiring. If the received actual functional name 119 does not match the assumed functional name 129 known by the client 103, a step 213 is performed.

**Step 213:** If the received actual functional name is not matching the assumed functional name 129 known by the client 103, a request for confirmation by an end-user is automatically generated by the client 103. In a non limiting example, the client 103 is operated by the end-user, and a confirmation message is displayed by the client 103 so that the end-user confirms manually the received actual functional name 119.

In a non limiting example, at the step 207, the received actual first name 115 may not exactly match the information of the connection request of the assumed first name 125. In another example, the received actual first name 115 may refer to a different connection access than the first access 109 referenced by the assumed first name 125, due to a change of the access means to connect to the server 101. In these two cases, the step 209, to check the received actual second name 117, is then performed.

In another non limiting example, at the step 209, the received actual second name 117 may not exactly match the assumed second name 127. In another non limiting example, the received actual second name 117 may refer to properties of the second sub-network 135 that have been modified compared to the known information stored in the assumed second name 127. In these two cases, the step 211, to check the functional name 119, is then performed.

In yet another non limiting example, at the step 211, the received actual functional name 119 may not match the assumed functional name 129 known by the client 103, due for example to a modification of services at the server 101's side, like a deletion or addition of a particular service. In another non limiting example, the actual functional name 119 of the server 101 may have been updated compared to the information known to the client 103 and stored in the assumed functional name 129. In these two cases, the step 213 is then performed.

In an embodiment of the method according to the invention, the communication network 131, and subsequently the first sub-network 133 and the second sub-network 135, are comprised in a public key infrastructure. The client 103 and the server 101 are adapted to the public key infrastructure. For instance the client 103 is an user equipment operated by an end-user, and the server 101 is a Rich Communication Server from a company X.

In the exposed embodiment, the security document 121 comprised in the server 101 is a public key certificate complying with the public key infrastructure. The public key certificate is a digitally signed electronic document.

In a non limiting example, the Pretty Good Privacy (PGP) scheme is used for the public key infrastructure of the communication network 131.

In a preferred embodiment the standard X.509 is the standard of the public key infrastructure. It specifies the formats for public key certificates.

The public key certificate comprises the actual first name 115 as the Common Name of the certificate. It comprises also the actual second name 119 as the Subject Alternative Name of the certificate. In this non limiting example, the Common Name comprises the host name and the domain name of the server 101, and the Alternative Name comprises the DNS name of the second sub-network 135. The public key certificate further comprises the actual functional name 119 that represents the function fulfilled by the server 101.

In the step 201, the server 101 is assigned the actual functional name 119 that allows its identification without any doubt, such as "Rich Communication Server from company X".

For instance, the end-user operating the client 103 needs to connect to the communication server of his company. The client 103 comprises information to connect to the said server, such as the URL of the server 101, the domain wherein the server 101 is located, and the assumed function of the server 101, said connect information being respectively store in the assumed first name 125, the assumed second name 127 and the assumed functional name 129.

The client 103 initiates a request to connect to the server 101 in the step 203. The said request concerns the establishment of a secure connection with server 101. The initiated connection request is routed through the first connection 107 to the first access 109 which is a HyperText Transfer Protocol Secure (HTTPS) access, according to the URL of the server 101.

If the connection request is valid, in the step 205, the server 101 sends back to the client 103, the security document 121 which is the public key certificate, in this embodiment.

In the step 207, the client 103 checks the received actual first name 115 which is the Common Name comprised in the public key certificate. Compared to the assumed first name 125 known by the client 103, the received Common Name does not permit to identify the server 101, as the host name of the server 101 has been modified, for example.

In the step 209, the client 103 checks the received actual second name 115 with is the Subject Alternative Name comprised in the public key certificate. Compared to the assumed second name 127 known by the client 103, the received Subject Alternative Name does not permit to identify the server 101, as the DNS name of the sub-network 135 were changed for example.

In the step 211, the client 103 checks the received actual functional name 119 comprised in the public key certificate. If the received actual functional name 119 that designates the server 101 as "Rich Communication Server from company X" corresponds to the assumed functional name 129 that was used for the request of service initiated by the end-user, the server 101 is then identified by the client 103. The server 101 and the client 103 proceed then further in the establishment of the service. It has to be noted that in the context of the public key infrastructure, the public key certificate received by the client 103 is trusted as it is signed by a certification authority. It means that whatever identities are provided through the received actual first name 115, the received actual second name 117 and the received actual functional name 119 in the certificate, these identities are authentic since the authentication of the certificate is ensured by the digital signature of the document.

In an alternative embodiment, if the received actual functional name 119 does not match the assumed functional name 129, in the step 213, the client 103 prompts the end-user to confirm the received actual functional name 119 provided in the public key certificate. For example, the server 101 may have been modified to include new services or function, and hence the actual functional name 119 may have evolved compared to the assumed functional name 129 known by the client 103. In this step 213, the end-user is asked to confirm the identity of the server 101 by confirming if the received actual functional name 119 such as "Rich Communication Server and Gateway from company X", which differs from the assumed functional name 129, corresponds to the request of service that was initiated. If it corresponds to the service required by the end-user, then the server 101 is identified as the service provider, and the client 103 and the server 101 proceed further in the establishment of the service.

In order to further illustrate the realization of the invention detailed above, a description of the X.509 protocol with the functional name is provided.

The object "Subject Alternative Name" of the X.509 protocol is modified to add a new form Functional Name 119. The object "Subject Alternative Name" is a structure of type "GeneralName". It comprises objects such as "dNSName" or "x400Address" identifiers that are well-known in the X.509 protocol:
GeneralName ::= CHOICE {
otherName [0] OtherName,
rfc822Name [1] IA5String,
dNSName [2] IA5String,
x400Address [3] ORAddress,
directoryName [4] Name,
ediPartyName [5] EDIPartyName,
uniformResourceIdentifier [6] IA5String,
iPAddress [7] OCTET STRING,
registeredID [8] OBJECT IDENTIFIER}

The object "otherName" is modified according to the invention, in order to reference the actual functional name 119. The "otherName" Object Identifiers are defined as below:
id-pkix OBJECT IDENTIFIER ::= {iso(1) identified-organization(3)
   dod(6) internet(1) security(5) mechanisms(5) pkix(7)}
id-on OBJECT IDENTIFIER ::= {id-pkix 8} -- other name forms

The object identifier "id-pkix" indicates the keys to be used along the public key certificate. The object identifier "id-on" defines forms to be used along the public key certificate. Existing forms of "id-on" are for example: personalData(1), userGroup(2), id-on-permanentldentifier(3) etc.

For this realization of the invention, a new form is defined as "id-on-functionalName" in order to reference the functional name 119, as described below:
id-on-functionalName OBJECT IDENTIFIER ::= {id-on 8}

In this example, the "id-on-functionalName" children of object identifier "id-on" defines an "UTF8String" object that allows to encode the functional name 119 into a string format compliant with X.509 protocol.

In the exposed embodiment herein above the server 101 has been identified by its function and not by its logical access such as host name or DNS name. The invention provides an advantageous solution regarding cases where the accesses of a sub-network or of a server are modified. The functional name identifying the server by the services or functions provided by the said server allows to securely identifying a server without re-issuing a public key certificate.

It should be appreciated by those skilled in the art that any block diagrams herein represent conceptual views of illustrative circuitry embodying the principles of the invention. Similarly, it will be appreciated that any flow charts, and the like represent various processes which may be substantially represented in computer readable medium and so executed by a computer or processor, whether or not such computer or processor is explicitly shown.

In the claims, any reference signs placed between parentheses shall not be construed as limiting the scope of the claims.

## Claims

1. A method for a server (101) to be identified, in a communication network (131), said server (101) comprising an actual first name (115) and a actual second name (117), said actual first name and actual second name providing connect information related to the server (101), said method being **characterized in that** it comprises the following steps executed by the server (101):
- being (201) associated with a actual functional name (119) representative of the function of the server (101),
- providing (205) the actual first name (115), the actual second name (119) and the actual functional name (119) of the server (101) to a client (103) upon a connection request.

2. A method to identify a server (101) by a client (103), in a communication network (131), said client (103) comprising an assumed first name (125) and an assumed second name (127) that are assumed to provide connect information related to the server (101), said method comprising the following steps executed by the client (103):
- issuing (203) a request to connect to the server (101),
- receiving (205) from the server (101) an actual first name (115) and a an actual second name (117), said actual first name and actual second name providing connect information related to the server (101),
- identifying (207) the server (101) by checking if the actual first name (115) received from the server (101) matches the assumed first name (125),
- if the received actual first name (115) does not match the request, identifying (209) the server (101) by checking if the actual second name (117) received from the server (101) matches the assumed second name (127),
said method being **characterized in that** it comprises the following steps executed by the client:
- associating the server (101) with an assumed functional name (129) being assumed to be representative of the function of the server (101),
- receiving (205) from the server (101) an actual functional name (119) representative of the function of the server (101),
- if the received actual first name (115) and the received actual second name (117) from the server (101) respectively do not match the assumed first name (125) and the assumed second name (127), identifying (211) the server by checking if the actual functional name (119) received from the server (101) matches the assumed functional name (129).

3. A method according to claim 2 comprising a step of requesting (213) the client (103) to confirm the received actual functional name (119) of the server (101) if the said received actual functional name (119) does not match the assumed functional name (129).

4. A method according to claim 1 wherein the actual functional name (119) of the server (101) comprises information associated to the server (101).

5. A method according to any of the claims 1, or 4 , wherein the server (101) is in a public key infrastructure.

6. A method according to claim 5, wherein the server (101) provides the actual first name (115), the actual second name (117) and the actual functional name (119) in a public key certificate, said public key certificate is a digitally signed electronic document according to the standard X.509.

7. A method according to claim 6, wherein the actual functional name (119) of the server (101) is a form id-on-functionalName from id-on object from the OtherName object from the structure GeneralName of the structure SubjectAltName, said object and structures being defined according to the X.509 standard.

8. A method according to claim 7, wherein the value from id-on field is an UTF8string object according to the X.509 standard.

9. A method according to claim 2 wherein the client (103) is in a public key infrastructure.

10. A method according to claim 9 wherein the client (103) receives the actual first name (115), the actual second name (117) and the actual functional name (119) of the server (101) in a public key certificate, said public key certificate is a digitally signed electronic document according to the standard X.509.

11. A server (101), in a communication network (131), said server (101) comprising a actual first name (115) and a actual second name (117), and **characterized in that** it comprises:
- means for being associated with an actual functional name (119) representative of the function of the server (101),
- means for providing the actual first name (115), the actual second name (117) and the actual functional name (119) upon a connection request.

12. A server (101) according to claim 9, wherein the server (101) is adapted to the standard X.509.

13. A client (103), in a communication network (131), comprising an assumed first name (125) and an assumed second name (127) that are assumed to designate the server (101), and further comprising:
- means for issuing a request to connect to a server (101),
- means for receiving from the server (101) an actual first name (115) and an actual second name (117) said actual first name and actual second name providing connect information related to the server (101),
- means for identifying the server (101) by checking if the actual first name (115) received from the server (101) matches the assumed first name (125),
- means for identifying the server (101) by checking if the actual second name (117) received from the server (101) matches the assumed second name (127),
said client (103) being **characterized in that** it further comprises:
- means for associating the server (101) with an assumed functional name (129),
- means for receiving from the server (101), an actual functional name (119) representative of the function of the server (101),
- means for identifying the server (101) by checking if the actual functional name (119) received from the server (101) matches the assumed functional name (129),
- means for establishing a secured connection with the server (101).

14. A client (103) according to claim 13, wherein the client (103) is adapted to the standard X.509.
